# EUROPEAN PATENT SPECIFICATION

(11) **EP 1 369 025 B1**
(45) Date of publication and mention of the grant of the patent: **26.12.2007**
(21) Application number: 03076218.1
(22) Date of filing: 28.04.2003
(51) Int. Cl.: A01D 75/20, A01B 69/00

(54) **An autonomous agricultural machine for performing an agricultural operation, in particular crop processing**
Autonome landwirtschaftliche Maschine zur Behandlung von Erntegut
Machine agricole autonome pour le traitement de récolte

(30) Priority: 06.06.2002 NL 1020798
(43) Date of publication of application: 10.12.2003
(73) Proprietor: Lely Enterprises AG, 6300 ZUG (CH)
(72) Inventor: Miedema, Theo Jan, 2676 VB Maasdijk (NL)
(74) Representative: Corten, Maurice Jean F.M.

(56) References cited:
- EP-A- 0 479 190
- US-A- 3 111 800
- US-A- 4 354 339
- US-A- 5 163 273
- US-A- 5 727 371

## Description

The invention relates to an autonomous agricultural machine for performing an agricultural operation, in particular crop processing, according to the preamble of claim 1.

Such an autonomous agricultural machine is known.

E.g. US 5,163,273 discloses an automatic lawn mower vehicle with a drive-wheel assembly with a motor, and with a plurality of grass cutters.

The present invention aims inter alia at providing an autonomous agricultural machine for performing an agricultural operation, in particular crop processing, which machine comprises an improved safety-system.

For this purpose, according to the invention an autonomous agricultural machine of the above-described type comprises the features of the characterizing part of claim 1. The protecting element is automatically operated in dependence on the displacement signal, which improves safety.

Although the displacement-detector may be a separate detector, it is advantageous if the displacement-detector comprises the drive of the agricultural machine. This makes it possible that, when the drive of the agricultural machine is activated, the displacement signal is emitted at the same time. It is pointed out here that in many cases the drive for displacing the agricultural machine is also used for moving the agricultural device.

In a safe embodiment of an agricultural machine according to the invention, the operating device is suitable for bringing the protecting element into an active position in which the protecting element protects the movable agricultural device if the displacement signal indicates that the agricultural machine is not moving, and is suitable for bringing the protecting element into an inactive position in which the protecting element releases the movable agricultural device if the displacement signal indicates that the agricultural machine is moving.

The operating device is preferably an electronic operating device. As an alternative, the operating device is a hydraulic operating device.

The invention will be explained hereinafter in further detail with reference to the embodiments shown in the drawing, in which:
Figure 1 shows schematically in side view an autonomous agricultural machine in an embodiment of the invention, and
Figure 2 is an embodiment of an operating device for operating a protecting element of an autonomous agricultural machine as shown in Figure 1.

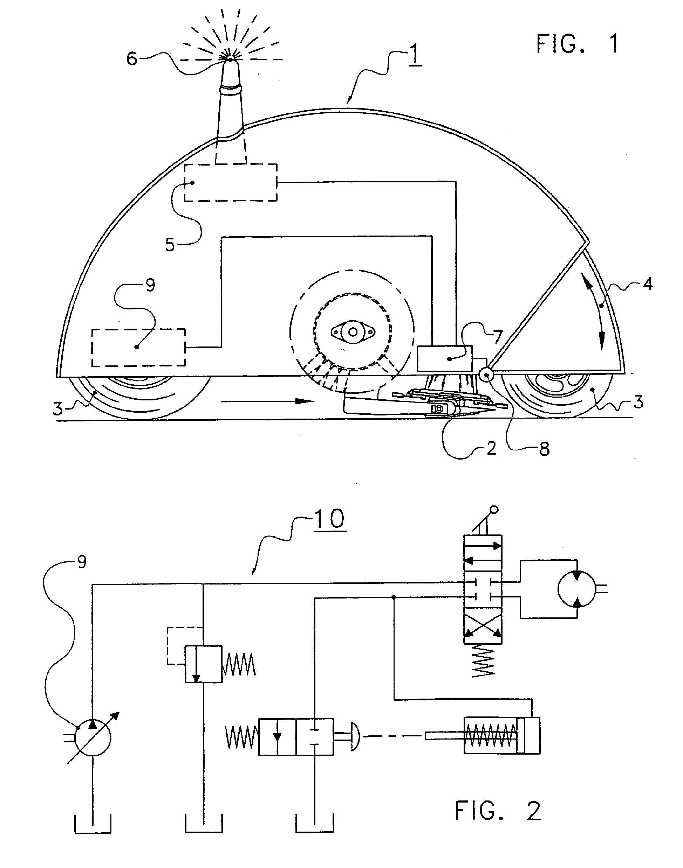

Figure 1 shows schematically in side view an autonomous agricultural machine 1 in an embodiment of the invention. It is pointed out here that an autonomous machine, i.e. a machine that does not require a driver for being moved, but moves with the aid of inter alia a position-determining system, is known per se and will not be set out here in further detail for the sake of simplicity of the description. The autonomous agricultural machine 1 is suitable for performing an agricultural operation, in particular crop-processing, on a crop that is present on an agricultural parcel. In the embodiment shown the autonomous agricultural machine 1 is an autonomous mowing machine that mows crop that is present on the agricultural parcel by means of a mowing unit 2. Although several sorts of mowing units known per se may be used, in the embodiment shown the mowing unit 2 is constituted by mowing discs that are present on a cutter bar and are rotatable about an axis, which mowing discs are provided with mowing knives. It will be obvious that the agricultural machine may also be an agricultural machine for performing other crop-processing operations.

The agricultural machine 1 is supported and displaced over the agricultural parcel by means of wheels 3. The autonomous agricultural machine 1 further comprises a mechanical protecting element 4, in the embodiment shown constituted by a cap, for protecting the movable agricultural device, in the embodiment shown the mowing unit 2.

The agricultural machine 1 further comprises a position-determining element 5 known per se, in the embodiment shown provided with an aerial 6, for determining the position of the autonomous agricultural machine 1 in the agricultural parcel by means of for example a GPS-system. Said position-determining element 5 may also be used as displacement-detector for detecting displacement of the agricultural machine 1. Depending on the detected displacement, the position-determining element 5 emits a displacement signal to an operating device 7 for operating, in dependence on the displacement signal, the protecting element 4. Operating may result for example in rotation of the cap 4 about an axis of rotation 8. In this case the operating device 7 is preferably an electronic operating device.

Although the protective cap 4 may be brought into the position in which it protects the mowing unit 2 when the displacing speed of the agricultural machine 1 comes below a predetermined magnitude, from a point of view of safety, in the embodiment shown the protecting element 4 is brought by the operating device 7 into the active position in which the protecting element 4 protects the movable agricultural device 2 if the displacement signal indicates that the agricultural machine 1 is not moving, and the protecting element 4 is brought by the operating device 7 into the inactive position in which the protecting element 4 releases the movable agricultural device 2 if the displacement signal indicates that the agricultural machine 1 is moving.

In the embodiment shown in Figure 2 the displacement-detector comprises the drive 9 of the agricultural machine 1. When the drive 9 is energized, not only the wheels 3 are driven, but the mowing unit 2 is also set in motion via the hydraulic scheme shown as exemplary embodiment, and at the same time the protecting element 4 is brought into the inactive position. When the drive of the wheels 3 is stopped, then, at the same time, the protecting element is brought into the active position and the drive of the mowing unit is stopped.

It will be obvious that the invention is not limited to the above-described embodiments. The mechanical protecting element may for example comprise other means such as a box, a hatch, a canvas, a rolling door, an airbag or the like. Checking means may further be applied for checking the correct functioning of the mechanical detecting element.

## Claims

1. An autonomous agricultural machine (1) for performing an agricultural operation, in particular crop processing, which agricultural machine (1) is autonomously displaceable over an agricultural parcel, the agricultural machine (1) being provided with a drive (9) and with a movable agricultural device (2) for performing the agricultural operation, **characterized in that** the agricultural machine (1) is provided with a protecting element (4) for protecting the moving agricultural device (2), with a displacement-detector (5) for detecting displacement of the agricultural machine (1) and for emitting a displacement signal, and with an operating device (7) for operating the protecting element (4) in dependence on the displacement signal.

2. An autonomous agricultural machine (1) as claimed in claim 1, **characterized in that** the displacement-detector (5) comprises the drive (9) of the agricultural machine (1).

3. An autonomous agricultural machine (1) as claimed in claim 1 or 2, **characterized in that** the operating device (7) brings the protecting element (4) into an active position in which the protecting element (4) protects the movable agricultural device (2) if the displacement signal indicates that the agricultural machine (1) is not moving, and **in that** the operating device (7) brings the protecting element (4) into an inactive position in which the protecting element (4) releases the movable agricultural device (2) if the displacement signal indicates that the agricultural machine (1) is moving.

4. An autonomous agricultural machine (1) as claimed in any one of the preceding claims, **characterized in that** the operating device (7) is an electronic operating device.

5. An autonomous agricultural machine (1) as claimed in any one of claims 1 to 3, **characterized in that** the operating device (7) is a hydraulic operating device.

## Patentansprüche

1. Autonome landwirtschaftliche Maschine (1) zum Durchführen einer landwirtschaftlichen Arbeit, insbesondere einer Gutaufbereitung, wobei die landwirtschaftliche Maschine (1) autonom über eine landwirtschaftliche Parzelle verlagerbar ist, wobei die landwirtschaftliche Maschine (1) mit einem Antrieb (9) und mit einer beweglichen landwirtschaftlichen Vorrichtung (2) zum Durchführen der landwirtschaftlichen Arbeit versehen ist,
**dadurch gekennzeichnet, dass** die landwirtschaftliche Maschine (1) mit einem Schutzelement (4) zum Schützen der beweglichen landwirtschaftlichen Vorrichtung (2), mit einem Verlagerungsdetektor (5) zum Detektieren der Verlagerung der landwirtschaftlichen Maschine (1) und zum Ausgeben eines Verlagerungssignals sowie mit einer Steuervorrichtung (7) zum Steuern des Schutzelements (4) in Abhängigkeit von dem Verlagerungssignal versehen ist.

2. Autonome landwirtschaftliche Maschine (1) nach Anspruch 1,
**dadurch gekennzeichnet, dass** der Verlagerungsdetektor (5) den Antrieb (9) der landwirtschaftlichen Maschine (1) umfasst.

3. Autonome landwirtschaftliche Maschine (1) nach Anspruch 1 oder 2,
**dadurch gekennzeichnet, dass** die Steuervorrichtung (7) das Schutzelement (4) in eine aktive Position einstellt, in der das Schutzelement (4) die bewegliche landwirtschaftliche Vorrichtung (2) schützt, wenn das Verlagerungssignal anzeigt, dass sich die landwirtschaftliche Maschine (1) nicht bewegt, und dass die Steuervorrichtung (7) das Schutzelement (4) in eine inaktive Position einstellt, in der das Schutzelement (4) die bewegliche landwirtschaftliche Vorrichtung (2) freigibt, wenn das Verlagerungssignal anzeigt, dass sich die landwirtschaftliche Maschine (1) bewegt.

4. Autonome landwirtschaftliche Maschine (1) nach einem der vorhergehenden Ansprüche,
**dadurch gekennzeichnet, dass** die Steuervorrichtung (7) eine elektronische Steuervorrichtung ist.

5. Autonome landwirtschaftliche Maschine (1) nach einem der Ansprüche 1 bis 3,
**dadurch gekennzeichnet, dass** die Steuervorrichtung (7) eine hydraulische Steuervorrichtung ist.

## Revendications

1. Machine agricole autonome (1) pour la réalisation d'une opération agricole, en particulier le traitement de récolte, laquelle machine agricole (1) peut être déplacée de manière autonome sur une parcelle agricole, la machine agricole (1) étant pourvue d'une commande (9) et d'un dispositif agricole mobile (2) pour la réalisation de l'opération agricole, **caractérisée en ce que** la machine agricole (1) est pourvue d'un élément protecteur (4) pour la protection du dispositif agricole mobile (2), d'un détecteur de déplacement (5) pour la détection du déplacement de la machine agricole (1) et pour l'émission d'un signal de déplacement, et d'un dispositif d'actionnement (7) pour actionner l'élément protecteur (4) en rapport avec le signal de déplacement.

2. Machine agricole autonome (1) selon la revendication 1, **caractérisée en ce que** le détecteur de déplacement (5) comprend la commande (9) de la machine agricole (1).

3. Machine agricole autonome (1) selon la revendication 1 ou 2, **caractérisée en ce que** le dispositif d'actionnement (7) amène l'élément protecteur (4) en position active dans laquelle l'élément protecteur (4) protège le dispositif agricole mobile (2) si le signal de déplacement indique que la machine agricole (1) n'est pas en mouvement, et **en ce que** le dispositif d'actionnement (7) amène l'élément protecteur (4) en position inactive dans laquelle l'élément protecteur (4) libère le dispositif agricole mobile (2) si le signal de déplacement indique que la machine agricole (1) est en mouvement.

4. Machine agricole autonome (1) selon l'une quelconque des revendications précédentes, **caractérisée en ce que** le dispositif d'actionnement (7) est un dispositif d'actionnement électronique.

5. Machine agricole autonome (1) selon l'une quelconque des revendications 1 à 3, **caractérisée en ce que** le dispositif d'actionnement (7) est un dispositif d'actionnement hydraulique.
